# EUROPÄISCHE PATENTSCHRIFT

(11) **EP 2 797 675 B1**
(45) Veröffentlichungstag und Bekanntmachung des Hinweises auf die Patenterteilung: **08.03.2017**
(21) Anmeldenummer: 12794894.1
(22) Anmeldetag: 13.11.2012
(51) Int. Cl.: B01D 36/00

(54) **FILTERVORRICHTUNG MIT EINEM WASSERSAMMELBEREICH**
FILTER DEVICE WITH A WATER-COLLECTING AREA
DISPOSITIF DE FILTRE AVEC UNE ZONE DE COLLECTE D'EAU

(30) Priorität: 27.12.2011 DE 102011089997
(43) Veröffentlichungstag der Anmeldung: 05.11.2014
(73) Patentinhaber: Robert Bosch GmbH, 70442 Stuttgart (DE)
(72) Erfinder: BALLIER, Fabian-Felix, 71292 Friolzheim (DE)
(86) Internationale Anmeldenummer: PCT/EP2012/072505
(87) Internationale Veröffentlichungsnummer: WO 2013/097972

(56) Entgegenhaltungen:
- US-A- 1 468 906
- US-B1- 6 203 698

## Beschreibung

### Stand der Technik

Die Erfindung betrifft eine Filtervorrichtung zum Filtern eines Mediums mit einem Wassersammelbereich zum Sammeln von aus dem Medium abgeschiedenem Wasser und einem Wassersensor zum Erkennen des Füllstands des Wassers am Wassersammelbereich. Derartige Filtervorrichtungen werden insbesondere vorzugsweise zum Filtern von Harnstoff oder Brennstoff, wie Benzin oder Diesel, von Kraftfahrzeugen verwendet.

Bei Filtervorrichtungen und insbesondere bei Flüssigkeitsfiltern in der Brennstoffversorgung von Kraftfahrzeugen sind am zugehörigen Filterelement Wasserabscheider vorgesehen, mittels denen das im zu filternden Medium enthaltene Wasser abgeschieden werden kann. Das vom Wasserabscheider abgeschiedene Wasser weist in der Regel eine höhere spezifische Dichte auf, als das zu filternde Medium und sammelt sich daher im Filtergehäuse an dessen Boden in einem Wassersammelbereich.

Es ist ferner bekannt bei derartigen Filtervorrichtungen einen Wassersensor vorzusehen, mit dem der Füllstand von abgeschiedenem und im Filtergehäuse gesammeltem Wasser erkannt werden kann.

Aus der US 6,203,698 B1 ist eine derartige Filtervorrichtung zur Filtrierung von Kraftstoff und zur Abscheidung von Wasser aus Kraftstoff bekannt.

### Offenbarung der Erfindung

Erfindungsgemäß ist eine Filtervorrichtung zum Filtern eines Mediums mit einem Wassersammelbereich zum Sammeln von aus dem Medium abgeschiedenem Wasser und einem Wassersensor zum Erkennen des Füllstands des Wassers am Wassersammelbereich geschaffen, bei der eine Trennfläche vorgesehen ist, mit der der Wassersammelbereich in vertikaler Richtung betrachtet unterteilt ist.

Mit der erfindungsgemäßen Trennfläche ist unterhalb von dieser ein Wassersammelteilbereich geschaffen, in dem sich das abgeschiedene Wasser ablagern und anreichern kann. In diesem Wassersammelteilbereich ist das Wasser von der Trennfläche zurückgehalten, insbesondere dann, wenn die zugehörige Filtervorrichtung gekippt oder geschwenkt wird. Ein solches Kippen oder Schwenken ergibt sich, wenn das Fahrzeug, an dem die Filtervorrichtung verbaut ist, sich neigt oder kippt. In diesen Fällen kam es bei bekannten Filtervorrichtungen dazu, dass das in der Filtervorrichtung angesammelte Wasser sich nur auf einer Seite des Wassersammelbereichs anreicherte, dort der Wasserspiegel entsprechend stieg und es dann zu einer Fehlanzeige des zugehörigen Wassersensors kam, wenn dieser nicht zentral sondern seitlich angeordnet war. Mit der erfindungsgemäßen Trennfläche ist ein Steigen des Wasserspiegels an einer einzelnen Seite des Wassersammelbereichs und damit eine derartige Fehlanzeige des Wassersensors vermieden.

Bei der erfindungsgemäßen Filtervorrichtung ist vorzugsweise die Trennfläche ringförmig mit einer zentralen Durchlassöffnung gestaltet. Die Ringform ermöglicht in deren Mitte bzw. Zentrum ein Eintreten des abgeschiedenen Wassers in den sich unter der Trennfläche befindenden Wassersammelteilbereich. Zugleich hält die Ringform das angesammelte Wasser insbesondere radial außen am Wassersammelbereich zurück. In diesem radial äußeren Bereich ist die Funktion der erfindungsgemäßen Trennfläche als Rückhalt für angesammeltes Wasser bei einem Schwenken oder Kippen der Filtervorrichtung besonders von Bedeutung.

Die Durchlassöffnung weist bevorzugt einen Durchmesser von größer 5 mm, vorzugsweise von 10 mm bis 20 mm auf. Die derart große Durchlassöffnung ist von Vorteil, weil dadurch Oberflächeneffekte von einströmendem Wasser und zugleich ausströmendem Brennstoff, insbesondere Diesel, vermieden werden können. Auf diese Weise kann eine Rückvermischung von einmal abgeschiedenem Wasser mit Brennstoff verhindert werden.

Die Durchlassöffnung weist ferner vorzugsweise einen Durchmesser von 10 % bis 50 %, vorzugsweise 20 % des Durchmessers des Wassersammelbereichs auf. Mit der derart großen Trennfläche stehen für diese mindestens 80 % des Durchmessers der Filtervorrichtung zur Verfügung. Die Trennfläche verdeckt dann eine ausreichend große Fläche, um wirkungsvoll angesammeltes Wasser wie gewünscht zurückzuhalten. Zugleich ist ein schneller, ungehinderter Eintritt von abgeschiedenem Wasser in den sich unter Trennfläche befindenden Wassersammelteilbereich gewährleistet.

Die Trennfläche ist vorteilhaft zumindest leicht trichterförmig gestaltet. Mit der Trichterform weist die Trennfläche in allen ihren Bereichen ein derartiges Gefälle auf, dass ein sicherer Abfluss von angesammeltem Wasser von dem sich oberhalb der Trennfläche befindenden Wassersammelteilbereich in den sich unterhalb der Trennfläche befindenden Wassersammelteilbereich sichergestellt ist. Das abgeschiedene Wasser läuft also an der als Trichter gestalteten Trennfläche in den unteren Wassersammelteilbereich ab.

Die zumindest leicht trichterförmige Trennfläche ist vorzugsweise mit einem Trichterwinkel zur Senkrechten von 45° bis 80 °, vorzugsweise 60° gestaltet. Der derartige Trichterwinkel ist besonders wirkungsvoll, um einerseits für einen guten Abfluss des abgeschiedenen Wassers zu sorgen und andererseits wirkungsvoll Wasser im unteren Wassersammelteilbereich zurückzuhalten.

Ferner ist bei der erfindungsgemäßen Filtervorrichtung vorteilhaft ein Wassersammelteilbereich unter der Trennfläche derart groß bemessen, dass bei vom Wassersensor zu erkennendem Füllstand und senkrecht ausgerichteter Filtervorrichtung das Wasser von unten bis an die Trennfläche reicht. Wenn der derart volle Wassersammelbereich gekippt oder geschwenkt wird, läuft das Wasser aus dem unteren Wassersammelteilbereich über die Trennfläche hinweg in den oberen Wassersammelteilbereich und gelangt dort vorteilhaft an Stellen, an denen dann der sich dort befindende Wassersensor den hohen Füllstand erkennen und anzeigen kann.

Der Wassersensor ist an der erfindungsgemäßen Filtervorrichtung bevorzugt seitlich angeordnet. Der derart angeordnete Wassersensor ermöglicht es, dass an einem Filtergehäuse der Filtervorrichtung dessen Gehäuseboden geöffnet und ein zugehöriges, sich im Filtergehäuse befindendes Filterelement von unten her ausgetauscht werden kann. Bei bisher bekannten Filtervorrichtungen war ein solcher Austausch des Filterelements von unten her nicht oder nur mit großem Aufwand möglich, weil sich am Gehäuseboden auch der dann elektrisch zu kontaktierende Wassersensor befand. Bei der erfindungsgemäßen Filtervorrichtung braucht der Wassersensor jedoch nicht am Gehäuseboden angeordnet zu sein.

Darüber hinaus ist bei der erfindungsgemäßen Filtervorrichtung der Wassersensor unmittelbar über der Trennfläche angeordnet. Der derart platzierte Wassersensor erkennt immer dann einen relevanten Füllstand, wenn Wasser aus dem unteren Wassersammelteilbereich über die Trennfläche hinweg in den oberen Wassersammeteilbereich strömt. Dies geschieht bei der erfindungsgemäßen Filtervorrichtung vorteilhaft aber immer nur dann, wenn sich im unteren Wassersammelteilbereich derart viel Wasser angesammelt hat, dass es von unten her an der Trennfläche ansteht und sich dann beim Kippen oder Schwenken auch oben über die Trennfläche hinweg in die Kipprichtung hin ergießt.

Schließlich ist an der Filtervorrichtung gemäß der Erfindung bevorzugt ein Filterelement vorgesehen, das in einem Filtergehäuse mit einem zugehörigen Gehäuseboden angeordnet ist. Der Gehäuseboden ist dabei vorteilhaft zum Wechseln des Filterelements entfernbar. Die derartige Gestaltung ist, wie oben bereits erwähnt, besonders von Vorteil, denn sie ermöglicht neuartige Einbauweisen und Platzierungen von Filtervorrichtungen. Dies ist im Hinblick auf die bei modernen Fahrzeugen geforderten Anordnungsmöglichkeiten ein wichtiges Funktionsmerkmal. Nur Filtervorrichtungen, die in dem zur Verfügung stehenden Bauraum installiert und betrieben werden können, sind bei diesen modernen Fahrzeugen überhaupt verwendbar.

Nachfolgend wird ein Ausführungsbeispiel der erfindungsgemäßen Lösung anhand der beigefügten schematischen Zeichnungen näher erläutert. Es zeigt:
- Fig. 1: einen perspektivischen Längsschnitt einer Filtervorrichtung gemäß dem Stand der Technik,
- Fig. 2: eine Prinzipskizze der Filtervorrichtung gemäß Fig. 1 bei vertikaler Lage,
- Fig. 3: die Prinzipskizze gemäß Fig. 2 bei gekippter Lage der Filtervorrichtung,
- Fig. 4: einen perspektivischen Längsschnitt einer Filtervorrichtung gemäß der Erfindung,
- Fig. 5: eine Prinzipskizze der Filtervorrichtung gemäß Fig. 4 bei vertikaler Lage und
- Fig. 6: die Prinzipskizze gemäß Fig. 5 bei gekippter Lage der Filtervorrichtung.

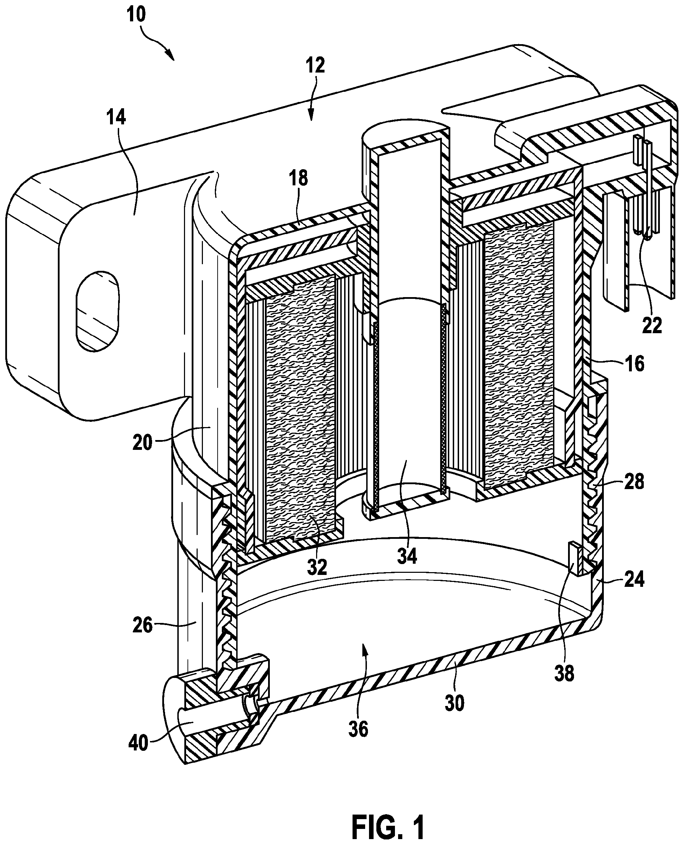

In Fig. 1 ist eine Filtervorrichtung 10 dargestellt, die ein im Wesentlichen kreiszylinderförmiges Filtergehäuse 12 umfasst. Das Filtergehäuse 12 ist mittels einer Halterung 14 an einem weiter nicht dargestellten Fahrzeug, insbesondere in dessen Motorraum oder an dessen Fahrzeugboden ortsfest anzubringen. Die Filtervorrichtung 10 dient dazu Brennstoff als flüssiges Medium zu filtern, damit dieser Brennstoff einem Verbrennungsmotor des Fahrzeugs zugeführt werden kann, ohne dass sich darin Fremdstoffe befinden. Ferner dient die Filtervorrichtung 10 dazu ungelöstes Wasser aus dem Brennstoff zu entfernen.

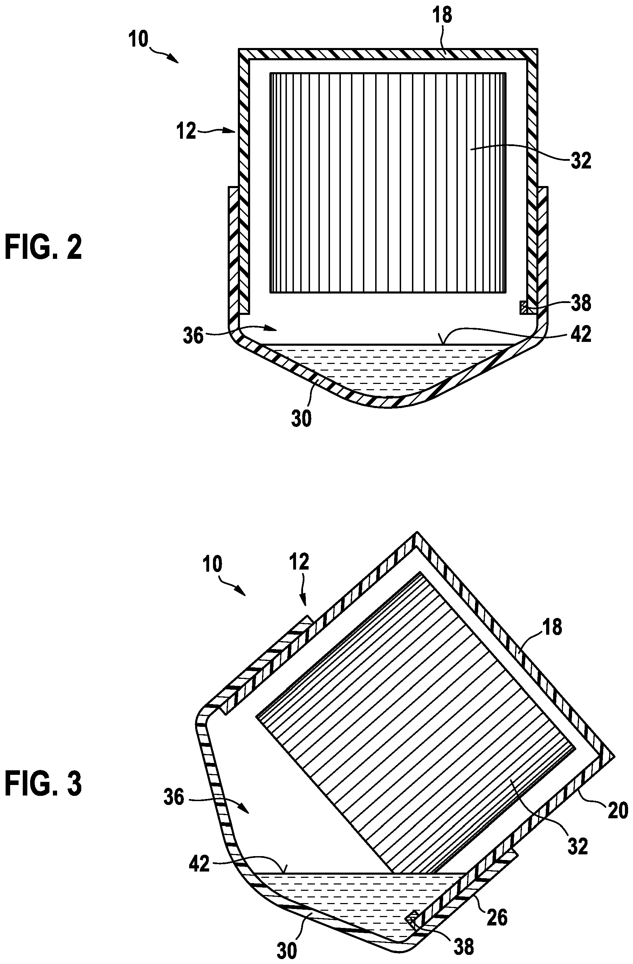

Das Filtergehäuse 12 ist dazu mit einem oberen Gehäusebecher 16 gestaltet, der von einem im Wesentlichen waagrecht ausgerichteten Gehäusedeckel 18 und einer im Wesentlichen senkrecht ausgerichteten, kreiszylindrischen oberen Gehäusewand 20 gebildet ist. An dem oberen Gehäusebecher 16 befindet sich ein von diesem seitlich gewinkelt abstehender elektrischer Anschluss 22. Ferner umfasst das Filtergehäuse 12 einen unteren Gehäusebecher 24, der unter anderem von einer unteren Gehäusewand 26 gebildet ist. Die untere Gehäusewand 26 ist mittels eines Gewindes 28 mit der oberen Gehäusewand 20 verschraubt. Ferner ist die untere Gehäusewand 26 mittels eines sich im Wesentlichen waagrecht erstreckenden Gehäusebodens 30 nach unten hin abgeschlossen. Der Gehäuseboden 30 kann alternativ auch konisch gestaltet sein (siehe die Ausführungsvariante gemäß Fig. 2 und 3).

In dem derart hohlzylindrischen Filtergehäuse 12 befindet sich ein ebenfalls hohlzylindrisches Filterelement 32, an dem die eigentliche Filterung des Brennstoffs geschieht. Dazu wird der Brennstoff durch einen nicht dargestellten Einlass in das Filtergehäuse 12 eingeleitet, durch das Filterelement 32 hindurchgeleitet und gelangt durch einen ebenfalls nicht dargestellten Auslass wieder aus dem Filtergehäuse 12 heraus. Das Filterelement 32 kann getauscht werden, indem der untere Gehäusebecher 24 mit seinem Gehäuseboden 30 von dem oberen Gehäusebecher 16 abgeschraubt wird.

Im Zentrum des hohlzylindrischen Filterelements 32 ist ein patronenförmiger Wasserabscheider 34 angeordnet, an dem während des Filtervorgangs ferner ungelöstes Wasser aus dem gefilterten Brennstoff abgeschieden wird. Dieses ungelöste Wasser gelangt aufgrund seiner spezifischen Dichte, die größer als die spezifische Dichte des Brennstoffs ist, nach unten in einen dort im unteren Gehäusebecher 24 vorgesehenen Wassersammelbereich 36.

Radial außen ist an der Seite des Wassersammelbereichs 36 am unteren Endbereich der oberen Gehäusewand 20 ein Wassersensor 38 angeordnet. Der Wassersensor 38 soll erkennen, wenn sich im Wassersammelbereich 36 derart viel Wasser befindet, dass eine ordnungsgemäße Funktion des Filterelements 32 oder des Wasserabscheiders 34 nicht mehr sichergestellt ist. Dazu ist der Wassersensor 38 vorzugsweise mit zwei geringfügig voneinander beabstandeten Elektroden gestaltet, die mit dem Anschluss 22 elektrisch leitend verbunden sind. Zwischen den Elektroden entsteht ein Stromfluss, wenn sie mit Wasser umspült sind. Dieser Stromfluss kann von einem (nicht dargstellten) Steuergerät erkannt und verarbeitet werden. Insbesondere kann von dem Steuergerät ein Signal erzeugt werden, aufgrund dessen das Wasser aus der Filtervorrichtung 10 abgelassen werden kann. Zum Ablassen des im Wassersammelbereich 36 angesammelten Wassers ist am Rand des Gehäusebodens 30 ein Wasserauslass 40 vorgesehen, der manuell geöffnet und geschlossen werden kann.

In den Fig. 2 und 3 ist veranschaulicht, was bei einer solchen Filtervorrichtung 10 geschieht, wenn sich in dieser ein noch vergleichsweise geringer Füllstand 42 an abgeschiedenem Wasser befindet und die Filtervorrichtung 10 gekippt oder geschwenkt wird. Das im Wassersammelbereich 36 angesammelte Wasser fließt dann seitlich über den Gehäuseboden 30 und entlang der unteren Gehäusewand 26 bis zum unteren Ende der oberen Gehäusewand 20 sowie dem dort angeordneten Wassersensor 38. Der Wassersensor 38 zeigt dann fälschlicherweise einen hohen Füllstand an abgeschiedenem Wasser an, obwohl sich vergleichsweise wenig Wasser im Wassersammelbereich 36 befindet.

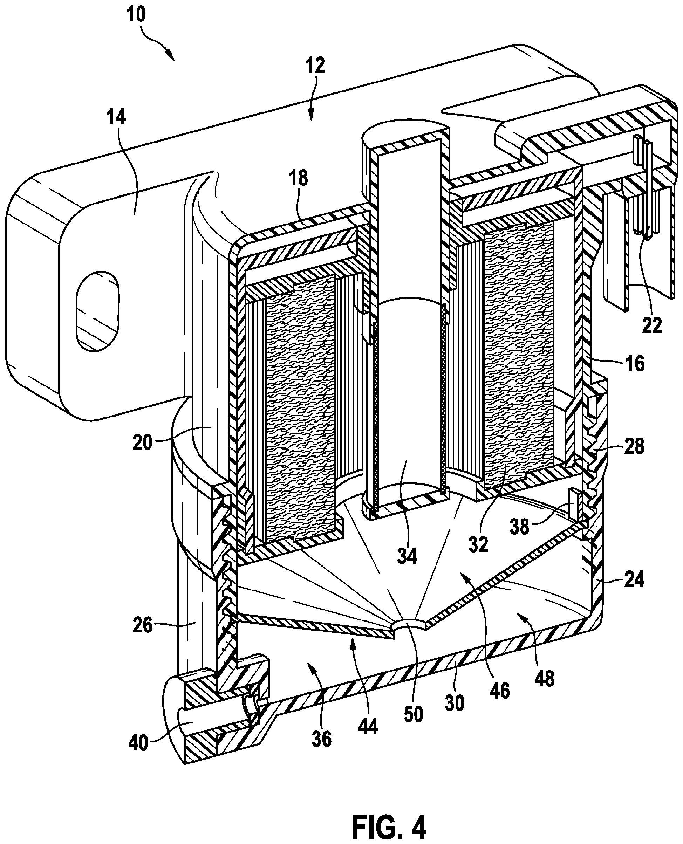

Die Fig. 4 bis 6 zeigen eine Filtervorrichtung 10, bei der diese Problematik einer Fehlanzeige des Wassersensors 38 bei gekippter oder geschwenkter Filtervorrichtung vermieden ist. Dazu ist der Wassersammelbereich 36 mittels einer Trennfläche 44 in vertikaler Richtung betrachtet in einen oberen Wassersammelteilbereich 46 und einen unteren Wassersammelteilbereich 48 getrennt.

Die Trennfläche 44 steht von der unteren Gehäusewand 26 nach radial innen ab und ist dabei als Ringscheibe leicht trichterförmig nach unten geneigt. Die Trennfläche 44 weist eine zentrale, kreisrunde Durchlassöffnung 50 auf, die mit einem Durchmesser 52 gestaltet ist. Der Durchmesser 52 ist 15 mm groß und damit derart groß gestaltet, dass es dort nicht aufgrund von Oberflächeneffekten zu einer Rückvermischung von abgeschiedenem Wasser mit Brennstoff kommt. Insgesamt überdeckt die Trennfläche 44 den größten Teil der Querschnittsfläche des Wassersammelbereichs 36, der dort einen Durchmesser 54 von 75 mm aufweist.

Die Trennfläche 44 ist in einem Trichterwinkel 56 von 60° zur senkrechten unteren Gehäusewand 26 geneigt. Ferner ist die Trennfläche 44 an der unteren Gehäusewand 26 so angeschlossen, dass sich der Wassersensor 38 am unteren Ende der oberen Gehäusewand 20 unmittelbar über der Trennfläche 44 befindet.

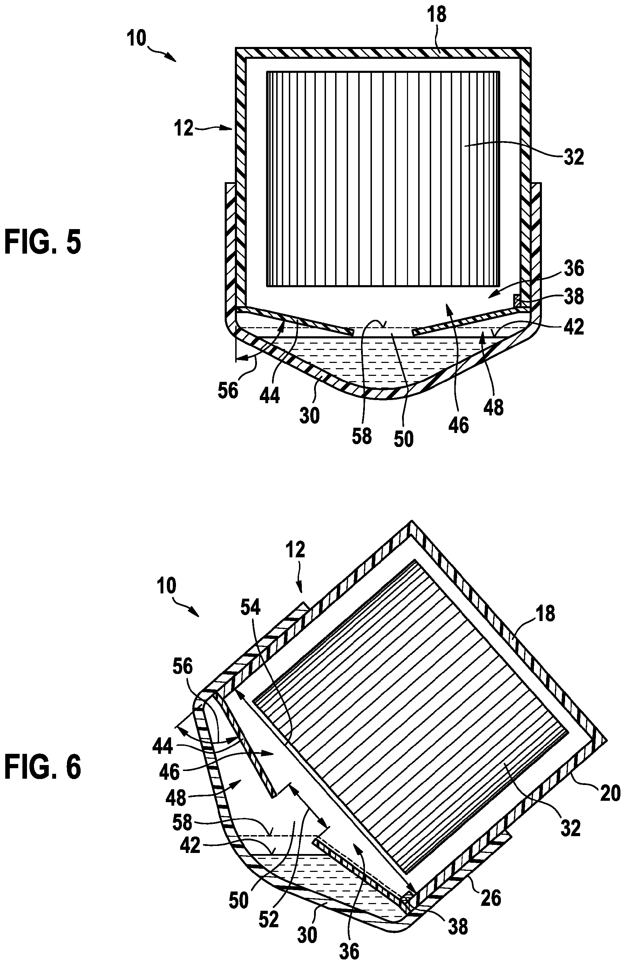

Wie in Fig. 6 veranschaulicht ist, erkennt der derart von der Trennfläche 44 nach unten hin abgeschottete Wassersensor 38 einen minimal zu erkennenden Füllstand 58 erst dann, wenn dieser von unten her bis an die Durchlassöffnung 50 der Trennfläche 44 heranreicht. Erst dann nämlich gelangt abgeschiedenes Wasser, welches sich im unteren Wassersammelteilbereich 48 gesammelt hat, über die Trennfläche 44 hinweg in den oberen Wassersammelteilbereich 46, wenn die derartige Filtervorrichtung 10 gekippt oder geschwenkt wird.

Ist der Füllstand 42 des angesammelten Wassers jedoch niedriger, so wird das Wasser im unteren Wassersammelteilbereich 48 mittels der Trennfläche 44 nach oben hin vom Wassersensor 38 ferngehalten, so dass dieser noch kein Wassermeldesignal für das Steuergerät erzeugt.

## Patentansprüche

1. Filtervorrichtung (10) zum Filtern eines Mediums mit einem Wassersammelbereich (36) zum Sammeln von aus dem Medium abgeschiedenem Wasser und einem Wassersensor (38) zum Erkennen des Füllstands (42; 58) des Wassers am Wassersammelbereich (36),
bei der eine Trennfläche (44) vorgesehen ist, mit der der Wassersammelbereich (36) in vertikaler Richtung betrachtet unterteilt ist,
**dadurch gekennzeichnet**, das der Wassersensor (38) unmittelbar über der Trennfläche (44) angeordnet ist, so dass beim Kippen oder Schwenken der Filtervorrichtung (10) ein Steigen des Wasserspiegels an einer einzelnen Seite des Wassersammelbereichs (36) und damit eine Fehlanzeige des Wassersensors (38) vermieden wird.

2. Filtervorrichtung nach Anspruch 1,
bei der die Trennfläche (44) ringförmig mit einer zentralen Durchlassöffnung (50) gestaltet ist.

3. Filtervorrichtung nach Anspruch 2,
bei der die Durchlassöffnung (50) einen Durchmesser von größer 5 mm, vorzugsweise von 10 mm bis 20 mm aufweist.

4. Filtervorrichtung nach Anspruch 2 oder 3,
bei der die Durchlassöffnung (50) einen Durchmesser (52) von 10 % bis 50 %, vorzugsweise 20 % des Durchmessers (54) des Wassersammelbereichs (36) aufweist.

5. Filtervorrichtung nach einem der Ansprüche 1 bis 4,
bei der die Trennfläche (44) zumindest leicht trichterförmig gestaltet ist.

6. Filtervorrichtung nach Anspruch 5,
bei der die zumindest leicht trichterförmige Trennfläche (44) mit einem Trichterwinkel (56) zur Senkrechten von 45° bis 80°, vorzugsweise 60° gestaltet ist.

7. Filtervorrichtung nach einem der Ansprüche 1 bis 6,
bei der ein Wassersammelteilbereich (48) unter der Trennfläche (44) derart groß bemessen ist, dass bei vom Wassersensor (38) minimal zu erkennendem Füllstand (58) und senkrecht ausgerichteter Filtervorrichtung (10) das Wasser von unten bis an die Trennfläche (44) reicht.

8. Filtervorrichtung nach einem der Ansprüche 1 bis 7,
bei der der Wassersensor (38) seitlich an der Filtervorrichtung (10) angeordnet ist.

9. Filtervorrichtung nach einem der Ansprüche 1 bis 8,
mit einem Filterelement (32), das in einem Filtergehäuse (12) mit einem zugehörigen Gehäuseboden (30) angeordnet ist, bei dem der Gehäuseboden (30) zum Wechsel des Filterelements (32) entfernbar ist.

## Claims

1. Filter device (10) for filtering a medium, having a water-collecting area (36) for collecting water separated out from the medium, and a water sensor (38) for detecting the fill level (42; 58) of the water in the water-collecting area (36),
in which a dividing surface (44) is provided, with which the water-collecting area (36) is subdivided, as viewed in the vertical direction, **characterized in that** the water sensor (38) is arranged directly above the dividing surface (44), so that when the filter device (10) is tilted or pivoted, a rise in the water level on an individual side of the water-collecting area (36), and therefore an erroneous indication of the water sensor (38), is avoided.

2. Filter device according to Claim 1,
in which the dividing surface (44) is configured annularly with a central passage opening (50).

3. Filter device according to Claim 2,
in which the passage opening (50) has a diameter of greater than 5 mm, preferably of 10 mm to 20 mm.

4. Filter device according to Claim 2 or 3,
in which the passage opening (50) has a diameter (52) of 10% to 50%, preferably 20%, of the diameter (54) of the water-collecting area (36).

5. Filter device according to one of Claims 1 to 4,
in which the dividing surface (44) is configured to be at least slightly funnel-shaped.

6. Filter device according to Claim 5,
in which the at least slightly funnel-shaped dividing surface (44) is configured with a funnel angle (56) with respect to the vertical of 45° to 80°, preferably 60°.

7. Filter device according to one of Claims 1 to 6,
in which a water-collecting area (48) under the dividing surface (44) is dimensioned to be so large that with the minimum fill level (58) to be detected by the water sensor (38) and with the filter device (10) oriented vertically, the water reaches from the bottom up to the dividing surface (44).

8. Filter device according to one of Claims 1 to 7,
in which the water sensor (38) is arranged laterally on the filter device (10).

9. Filter device according to one of Claims 1 to 8, having a filter element (32) which is arranged in
a filter housing (12) with an associated housing base (30), in which the housing base (30) can be removed to change the filter element (32).

## Revendications

1. Dispositif de filtre (10) pour le filtrage d'un fluide avec une zone de collecte d'eau (36) destinée à collecter l'eau précipitée hors du fluide et avec un détecteur d'eau (38) pour détecter le niveau de remplissage (42; 58) de l'eau dans la zone de collecte d'eau (36), dans lequel il est prévu une face de séparation (44), avec laquelle la zone de collecte d'eau (36) est divisée, considérée en direction verticale, **caractérisé en ce que** le détecteur d'eau (38) est disposé immédiatement au-dessus de la face de séparation (44), de telle manière qu'en cas de basculement ou de pivotement du dispositif de filtre (10), une montée du niveau d'eau sur un seul côté de la zone de collecte d'eau (36) et dès lors une indication erronée du détecteur d'eau (38) soit évitée.

2. Dispositif de filtre selon la revendication 1, dans lequel la face de séparation (44) est de forme annulaire avec une ouverture de passage centrale (50).

3. Dispositif de filtre selon la revendication 2, dans lequel l'ouverture de passage (50) présente un diamètre plus grand que 5 mm, de préférence de 10 mm à 20 mm.

4. Dispositif de filtre selon la revendication 2 ou 3, dans lequel l'ouverture de passage (50) présente un diamètre (52) de 10 % à 50 %, de préférence de 20 % du diamètre (54) de la zone de collecte d'eau (36).

5. Dispositif de filtre selon l'une quelconque des revendications 1 à 4, dans lequel la face de séparation (44) est réalisée au moins légèrement en forme d'entonnoir.

6. Dispositif de filtre selon la revendication 5, dans lequel la face de séparation (44) au moins légèrement en forme d'entonnoir est réalisée avec un angle d'entonnoir (56) par rapport à la verticale de 45° à 80°, de préférence de 60°.

7. Dispositif de filtre selon l'une quelconque des revendications 1 à 6, dans lequel une zone partielle de collecte d'eau (48) sous la face de séparation (44) est dimensionnée à une grandeur telle que, avec le niveau de remplissage minimal (58) à détecter par le détecteur d'eau (38) et avec le dispositif de filtre (10) orienté verticalement, l'eau arrive par le bas jusqu'à la face de séparation (44).

8. Dispositif de filtre selon l'une quelconque des revendications 1 à 7, dans lequel le détecteur d'eau (38) est disposé latéralement sur le dispositif de filtre (10).

9. Dispositif de filtre selon l'une quelconque des revendications 1 à 8, avec un élément de filtre (32), qui est disposé dans un boîtier de filtre (12) avec un fond de boîtier correspondant (30), dans lequel le fond de boîtier (30) est amovible pour le remplacement de l'élément de filtre (32).
